Europäisches Patentamt

European Patent Office

Office européen des brevets

(11) Veröffentlichungsnummer: **0 292 736 B1**

(12) **EUROPÄISCHE PATENTSCHRIFT**

(45) Veröffentlichungstag der Patentschrift: **21.08.91**

(21) Anmeldenummer: **88107026.2**

(22) Anmeldetag: **02.05.88**

(51) Int. Cl.⁵: **B01J 8/02**, B01J 4/00, //B09B3/00

(54) Gaseintragsvorrichtungen für Feststoffschüttungen.

(30) Priorität: **29.05.87 DE 3718132**

(43) Veröffentlichungstag der Anmeldung:
**30.11.88 Patentblatt 88/48**

(45) Bekanntmachung des Hinweises auf die
Patenterteilung:
**21.08.91 Patentblatt 91/34**

(84) Benannte Vertragsstaaten:
**AT BE CH DE FR LI NL**

(56) Entgegenhaltungen:
**EP-A- 0 255 354**
**DE-A- 1 808 339**

(73) Patentinhaber: **Linde Aktiengesellschaft**
**Abraham-Lincoln-Strasse 21**
**W-6200 Wiesbaden(DE)**

(72) Erfinder: **Matt, Konrad, Dr. rer. nat.**
**Leonrodstrasse 12**
**W-8000 München 19(DE)**
Erfinder: **Schneeberger, Heribert, Dipl.-Ing.**
**Grünwalder Strasse 46**
**W-8000 München 90(DE)**

(74) Vertreter: **Schaefer, Gerhard, Dr.**
**Linde Aktiengesellschaft Zentrale Patentabteilung**
**W-8023 Höllriegelskreuth(DE)**

## Beschreibung

Die Erfindung betrifft eine Gaseintragsvorrichtung zur mikrobiologischen Reinigung von Schüttungen aus mit Kohlenwasserstoffen kontaminiertem Erdreich mit einer Gaszufuhreinrichtung und einer damit in Verbindung stehenden Gasverteileinrichtung.

Aus der DE-A-1 756 022 ist ein Belüftungsboden für Behälter und Förderer von feinkörnigem oder staubförmigem Gut bekannt, dessen Oberfläche von einer feinporigen, plattenartig steifen Schicht gebildet ist. Unter dieser Schicht befindet sich ein zur Luftverteilung geeigneter, mit einer Druckluftquelle verbindbarer Raum, der von einer grobporigen Schicht ausgefüllt ist. Der Belüftungsboden ist aus einer Vielzahl von Platteneinheiten aufgebaut, die fest mit dem Unterboden verbunden bzw. verschraubt sind. Die Luftzufuhrleitungen sind in einer Betonschicht verlegt. Insgesamt handelt es sich also um ein äußerst massives, stationäres System, das auch erheblichen mechanischen und baulichen Aufwand erfordert.

Die DE-A-1 808 339 beschreibt einen Belüftungsboden für Behälter, Silos oder Förderrinnen, der aus kastenförmigen, an der Oberseite mit einer porösen Platte versehenen Belüftungselementen zusammengesetzt ist. Die Belüftungselemente sind in eine auf einen tragenden Boden aufgebrachte Vergußmasse, beispielsweise Beton, eingesenkt. Auch diese Konstruktion ist als starres, stationäres System anzusehen.

Diese bekannten Gaseintragsvorrichtungen eignen sich jedoch nicht zur mikrobiologischen Sanierung von mit Kohlenwasserstoffen verunreinigten Böden, da hierfür eine temporäre, preisgünstige und mit geringem baulichen Aufwand in kürzester Zeit erstellbare Begasungseinrichtung benötigt wird.

Der vorliegenden Erfindung liegt die Aufgabe zugrunde, eine Gaseintragsvorrichtung zur mikrobiologischen Reinigung von Schüttungen von aus mit Kohlenwasserstoffen kontaminiertem Erdreich bereitzustellen, die leicht auf- und abzubauen ist und die preisgünstig ist.

Diese Aufgabe wird erfindungsgemäß dadurch gelöst, daß als Gasverteileinrichtung perforierte Begasungsschläuche verwendet werden, die in einer inerten Schüttung verlegt sind, und die Schüttung aus mit Kohlenwasserstoffen Kontaminiertem Erdreich über der inerten Schüttung angeordnet ist.

Als inerte Schüttung kann z.B. Sand oder Kies dienen. Das Gas kann aus den perforierten Begasungsschläuchen entweichen und sich in der inerten Schüttung gleichmäßig verteilen, um schließlich über die gesamte Oberfläche der inerten Schüttung verteilt in die darüberliegende Schüttung aus Kontaminiertem Erdreich überzutreten.

Die Begasungsschläuche bestehen zweckmäßigerweise aus einem elastischen Gummimaterial und sind mit einer feinen Perforation versehen. Ein Eindringen von Schüttungsmaterial in die Schläuche beim Abstellen der Gaszufuhr wird so verhindert, da sich die Poren der Schläuche dann automatisch schließen.

Die erfindungsgemäße Vorrichtung garantiert somit einen gleichmäßigen gut verteilten Gaseintrag in die Schüttung aus verunreinigtem Erdreich. Die Verwendung der Begasungsschläuche bietet den Vorteil, kostengünstig zu sein, leicht an unterschiedliche Schüttungsarten und Behältergrößen anpaßbar und auch in bereits bestehende Apparate leicht einbaubar zu sein. Durch die Flexibilität der Schläuche ist eine Anpassung an beliebige Gerätegeometrien möglich.

In einer bevorzugten Ausführungsform der erfindungsgemäßen Vorrichtung besteht die inerte Schüttung aus einer groben und einer darüberliegenden feinen Schüttung. Die Begasungsschläuche liegen auf der groben Schüttung auf und sind von der feinen Schüttung umgeben. Auf diese Weise kann das Gas von den Begasungsschläuchen direkt nach unten in die grobe Schüttung entweichen und sich dort weit verteilen. Das Gas kann dann in die darüberliegende feine Schüttung gleichmäßig über die gesamte Oberfläche der groben Schüttung verteilt übertreten. Das Gas diffundiert durch die feine Schüttung und tritt schließlich feinverteilt in die darüberliegende Schüttung aus Kontaminiertem Erdreich über. Durch diese Anordnung wird also eine besonders gleichmäßige Verteilung des Gases in der zu reinigenden Schüttung erreicht.

Es hat sich dabei als besonders vorteilhaft erwiesen, daß die grobe inerte Schüttung eine Mächtigkeit von ca. 0,1 m und die darüber sich anschließende feine inerte Schüttung eine Mächtigkeit von ca. 0,3 m aufweisen.

Bevorzugterweise werden die Begasungsschläuche von Abdeckungen zum mechanischen Schutz vor Quetschungen durch das Gewicht der darüberliegenden inerten Schüttung und der Schüttung aus verunreinigtem Erdreich überdeckt. Die Abdeckungen können z.B. die Form von Halbzylindern aufweisen, so daß die Begasungsschläuche von den Abdeckungen halbkreisförmig umgeben sind. Zweckmäßigerweis werden handelsübliche Kabelabdeckungen verwendet, wie sie z.B. bei im Boden verlegten elektrischen Leitungen üblich sind. Die Abdeckungen brauchen nicht nahtlos aneinander zu stoßen, vielmehr können Stoßfugen zwischen den Abdeckungen erwünscht sein, um einen zusätzlichen Weg für aus den Begasungsschläuchen austretendes Gas in die inerte Schüttung zu schaffen.

Vorteilhafterweise wird über den Abdeckungen zum zusätzlichen mechanischen .Schutz der Begasungsschläuche eine Gewebematte angeordnet. Hierfür wird zweckmäßigerweise eine herkömmliche Baustahlgewebematte verwendet.

Somit erfolgt der Schutz der Begasungsschläuche vor Beschädigungen, Quetschungen etc. mit billigen, handelsüblichen Mitteln, so daß die Kosten für die erfindungsgemäße Vorrichtung minimal gehalten werden können.

Die Gewebematte ist zweckmäßigerweise in einer Höhe von ca. 0,1 - 0,2 m über den Begasungsschläuchen angeordnet.

Außerdem wurde festgestellt, daß sich eine besonders gute Verteilung des Gases in der Schüttung aus verunreinigtem Erdreich ergibt, wenn die Begasungsschläuche parallel in einem Abstand von ca. 1,2 m voneinander verlegt sind.

In einer weiteren bevorzugten Ausführungsform der Erfindung stehen die Begasungsschläuche mit einer Gaszufuhreinrichtung für technisch reinen Sauerstoff oder für andere Gase bzw. Gasgemische in Verbindung Dadurch wird eine besonders gute Versorgung der zu reinigenden Schüttung mit dem betreffenden Gas erreicht. Stehen die Begasungsschläuche mit einem Behälter für tiefkalt verflüssigtes oder druckverflüssigtes Gas bzw. für Druckgas in Verbindung, so ist zum Gaseintrag keine Hilfsenergie erforderlich.

Das mit Kohlenwasserstoffen, z.B. Öl, Benzin etc., verunreinigte Erdreich wird abgetragen und zu einer Schüttung aufgehäuft, in der die erfindungsgemäße Gaseintragsvorrichtung eingebaut ist. Das Erdreich bildet dann eine Feststoffschüttung, in der ein Abbau von Kohlenwasserstoffen z.B. durch bodeneigene (autochtone) Mikroorganismen erfolgen kann. Durch die erfindungsgemäße Gaseintragsvorrichtung werden die Mikroorganismen gleichmäßig mit ausreichenden Sauerstoffmengen versorgt. Die Erfindung bewirkt somit einen raschen und gleichmäßigen Abbau der Kohlenwasserstoffe durch eine Verbesserung der Lebensbedingungen der Mikroorganismen. Durch die Verwendung technisch reinen Sauerstoffs kann die Abbauleistung der Mikroorganismen weiter gesteigert werden.

Im folgenden wird die Erfindung anhand eines in den Zeichnungen schematisch dargestellten Ausführungsbeispiels näher erläutert:

Es zeigen:

Figur 1     die erfindungsgemäße Gaseintragsvorrichtung mit inerter Schüttung und Schüttung aus Kontaminiertem Erdreich,

Figur 2     den Begasungsschlauch mit Abdeckung im Querschnitt,

Figur 3     den Begasungsschlauch mit Abdeckung im Längsschnitt.

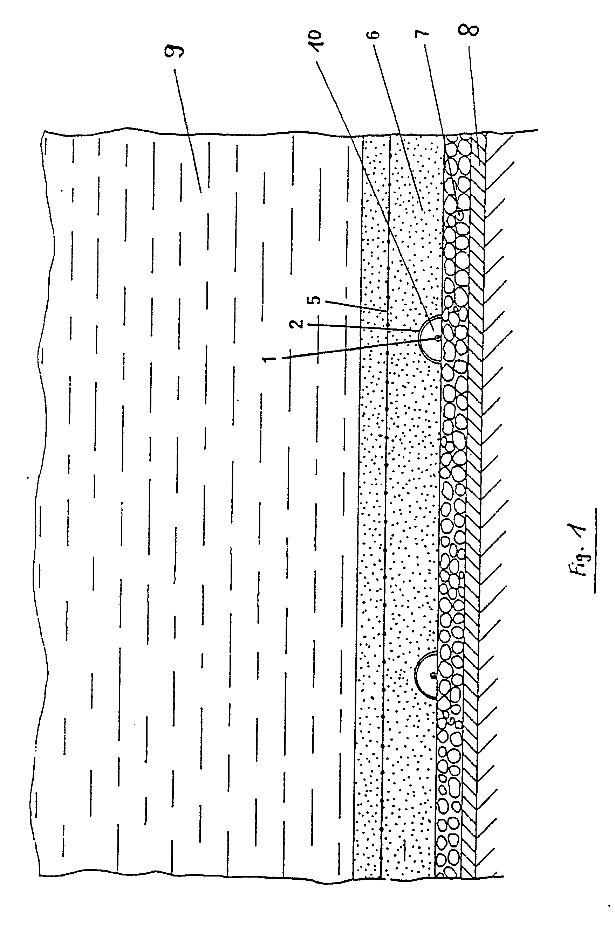

Bei der in Figur 1 dargestellten erfindungsgemäßen Gaseintragsvorrichtung ist in einem nichtdargestellten Behälter eine feste Unterlage (8) angebracht, auf der eine grobe inerte Schüttung (7) bis zu einer Höhe von 0,1 m aufgeschüttet ist. Auf der groben inerten Schüttung (7) liegt ein perforierter handelsüblicher Begasungsschlauch (1) mit einem Innendurchmesser von 19 mm aus Gummimaterial auf, der von handelsüblichen Kabelabdeckungen (2) zum mechanischen Schutz des Begasungsschlauches überdeckt ist. Die Kabelabdeckungen stoßen nicht nahtlos aneinander, sondern lassen Stoßfugen zwischen den Kabelabdeckungen (2) offen. Über der inerten groben Schüttung (7) ist eine inerte feine Schüttung (6) mit einer Höhe von 0,3 m aufgeschüttet. In einer Höhe von 0,3 m über der festen Unterlage (8) ist ein handelsübliches Baustahlgewebe zum zusätzlichen Schutz des Begasungsschlauchs (1) angebracht. Über der feinen inerten Schüttung (6) ist die zu begasende Schüttung (9) aus Kontaminiertem Erdreich über der festen Unterlage (8) aufgeschüttet. Im Ausführungsbeispiel handelt es sich um ölverunreinigtes Erdreich, das abgetragen und aufgeschichtet wurde. Das Erdreich wurde mit speziellen zum Ölabbau geeigneten autochtonen Mikroorganismen versetzt. Beim Betrieb der erfindungsmäßen Gaseintragsvorrichtung wird der Begasungsschlauch (1) über eine nichtdargestellte Versorgungsleitung mit technisch reinem Sauerstoff aus einem nichtdargestellten Behälter für tiefkalten verflüssigten Sauerstoff mit nachgeschaltetem Verdampfer gespeist. Sauerstoffgas dringt einerseits aus dem perforierten Begasungsschlauch (1) in den Zwischenraum (10) zwischen Begasungsschlauch (1) und Kabelabdeckung (2) und andererseits direkt in die unter dem Begasungsschlauch (1) liegende grobe inerte Schüttung (7), wo es sich schnell verbreitet. Von der groben inerten Schüttung (7) tritt das Gas in die feine Schüttung (6) über, wo es sich weiter fein verteilt. Das sich im Zwischenraum (10) befindliche Sauerstoffgas verläßt die Kabelabdeckungen (2) durch die zwischen den Kabelabdeckungen (2) liegenden Stoßfugen, tritt in die feine inerte Schüttung (6) über und verteilt sich dort. Über die gesamte Oberfläche der inerten Schüttung (6) verteilt tritt schließlich der Sauerstoff in das Erdreich (9) über. Auf diese Weise wird eine gleichmäßige Versorgung der im Erdreich befindlichen Mikroorganismen und damit ein rascher Abbau des Öls erreicht.

Figur 2 zeigt den Begasungsschlauch (1) mit der Kabelabdeckung (2) im Querschnitt. Begasungsschlauch (1) und Kabelabdeckung (2) liegen auf der groben inerten Schüttung (7) auf. Der Begasungsschlauch (1) wird von einem parallel zur Achse des Begasungsschlauchs (1) angebrachten Rundstahlstab (4) stabilisiert. Rundstahlstab (4) und Begasungsschlauch (1) sind über einen Kabelbinder (3) verbunden.

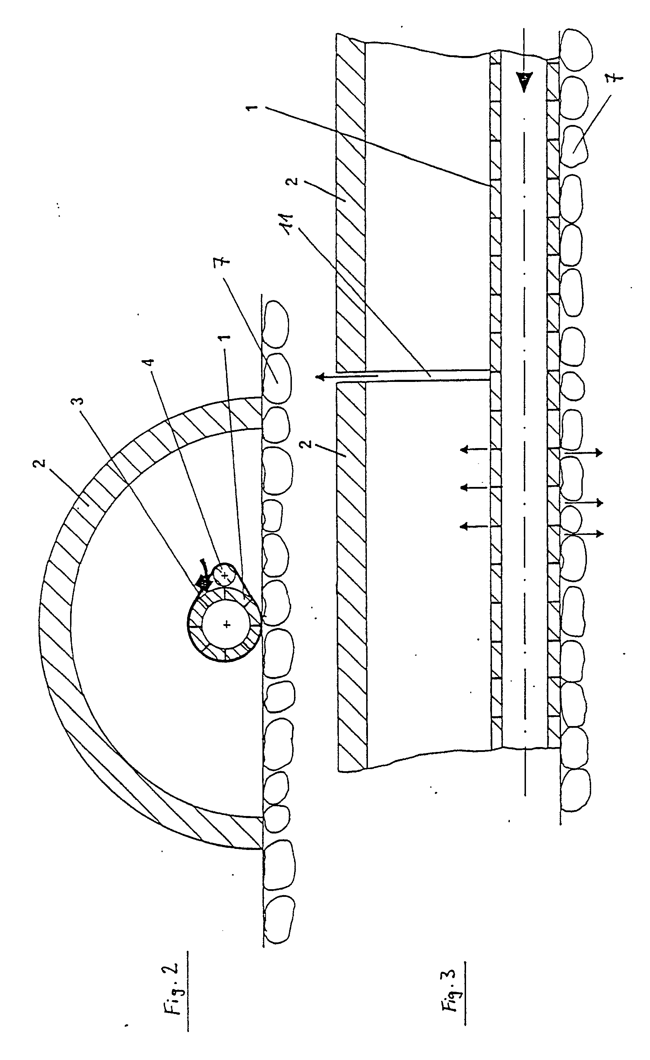

Figur 3 zeigt die in Figur 2 dargestellten Vorrichtungsteile im Längsschnitt. Es ist ein Abschnitt des auf der groben inerten Schüttung (7) liegenden und von Kabelabdeckungen (2) überdeckten Begasungsschlauchs (1) dargestellt. Die Kabelabdeckungen (2) schließen nicht nahtlos aneinander, sondern lassen Stoßfugen zwischen ihnen frei. Durch die in der Figur beispielhaft dargestellte Stoßfuge (11) kann der Sauerstoff in die nichtdargestellte feine inerte Schüttung entweichen. Die Pfeile sollen den Weg des Sauerstoffs andeuten. Sauerstoff wird über eine nichtdargestellte Versorgungsleitung in den Begasungsschlauch (1) geleitet und kann über die Perforierungen des Schlauchs einerseits in den Zwischenraum zwischen Schlauch (1) und Kabelabdeckung (2) und andererseits direkt in die unter dem Schlauch (1) liegende grobe inerte Schüttung (7) entweichen.

## Patentansprüche

1. Gaseintragsvorrichtung zur mikrobiologischen Reinigung von Schüttungen aus mit Kohlenwasserstoffen kontaminiertem Erdreich mit einer Gaszufuhreinrichtung und einer damit in Verbindung stehenden Gasverteileinrichtung, dadurch gekennzeichnet, daß als Gasverteileinrichtung perforierte Begasungsschläuche (1) verwendet werden, die in einer inerten Schüttung verlegt sind, und die Schüttung aus mit Kohlenwasserstoffen kontaminiertem Erdreich (9) über der inerten Schüttung angeordnet ist.

2. Gaseintragsvorrichtung nach Anspruch 1, dadurch gekennzeichnet, daß die inerte Schüttung aus einer groben inerten Schüttung (7), auf der die Begasungsschläuche (1) aufliegen, und einer feinen inerten Schüttung (6), die über der groben inerten Schüttung (7) angeordnet ist, besteht.

3. Gaseintragsvorrichtung nach Anspruch 2, dadurch gekennzeichnet, daß die grobe inerte Schüttung (7) eine Mächtigkeit von ca. 0,1 m und die feine inerte Schüttung (6) eine Mächtigkeit von ca. 0,3 m aufweisen.

4. Gaseintragsvorrichtung nach einem der Ansprüche 1 bis 3, dadurch gekennzeichnet, daß die Begasungsschläuche (1) von Abdeckungen (2) überdeckt sind.

5. Gaseintragsvorrichtung nach einem der Ansprüche 1 bis 4, dadurch gekennzeichnet, daß über den Begasungsschläuchen (1) eine Gewebematte (5) angeordnet ist.

6. Gaseintragsvorrichtung nach einem der Ansprüche 1 bis 5, dadurch gekennzeichnet, daß die Begasungsschläuche (1) parallel in einem Abstand von ca. 1,2 m voneinander verlegt sind.

7. Gaseintragsvorrichtung nach einem der Ansprüche 1 bis 6, dadurch gekennzeichnet, daß die Begasungsschläuche (1) mit einer Gaszufuhreinrichtung für technische Gase, z.B. reinen Sauerstoff oder Gasgemische in Verbindung stehen.

8. Gaseintragsvorrichtung nach Anspruch 7, dadurch gekennzeichnet, daß die Gaszufuhreinrichtung mit einem unter Druck stehenden Behälter für Druckgase in Verbindung steht.

9. Gaseintragsvorrichtung nach Anspruch 7, dadurch gekennzeichnet, daß die Gaszufuhreinrichtung mit einem Behälter für druckverflüssigte Gase in Verbindung steht.

10. Gaseintragsvorrichtung nach Anspruch 7, dadurch gekennzeichnet, daß die Gaszufuhreinrichtung mit einem Behälter für tiefkalte verflüssigte Gase in Verbindung steht.

## Claims

1. A gas input device for the microbiological purification of fillings of soil contaminated by hydrocarbons comprising a gas supply device and a gas distribution device connected thereto, characterised in that the gas distribution device consists of perforated gas treatment hoses (1) which are installed in an inert filling, and that the filling of soil (9) contaminated by hydrocarbons is arranged above the inert filling.

2. A gas input device as claimed in Claim 1, characterised in that the inert filling is composed of a coarse, inert filling (7) on which the gas treatment hoses (1) are arranged, and of a fine, inert filling (6) which is arranged above the coarse, inert filling (7).

3. A gas input device as claimed in Claim 2, characterised in that the coarse, inert filling (7) has a depth of about 0.1 m and the fine, inert filling (6) has a depth of about 0.3 m.

4. A gas input device as claimed in one of Claims 1 to 3, characterised in that the gas treatment hoses (1) are covered by covers (2).

5. A gas input device as claimed in one of Claims 1 to 4, characterised in that a fabric mat (5) is arranged above the gas treatment hoses (1).

6. A gas input device as claimed in one of Claims 1 to 5, characterised in that the gas treatment hoses (1) are installed in parallel at intervals of about 1.2 m from one another.

7. A gas input device as claimed in one of Claims 1 to 6, characterised in that the gas treatment hoses (1) are connected to a gas supply device for commercial gases, for example pure oxygen or gas mixtures.

8. A gas input device as claimed in Claim 7, characterised in that the gas supply device is connected to a container for pressure gases which is subject to pressure.

9. A gas input device as claimed in Claim 7, characterised in that the gas supply device is connected to a container for pressure-liquified gases.

10. A gas input device as claimed in Claim 7, characterised in that the gas supply device is connected to a container for low-temperature, liquified gases.

**Revendications**

1. Dispositif d'introduction de gaz destiné au nettoyage microbiologique de terres de déblai contaminées par des hydrocarbures, au moyen d'un dispositif d'alimentation en gaz et d'un dispositif de répartition de gaz relié à celui-ci, caractérisé en ce que l'on utilise des tuyaux (1) pour traitement gazeux en tant que dispositif de répartition de gaz, tuyaux qui sont installés dans un matériau de remblayage inerte et en ce que les terres de déblai (9) contaminées par des hydrocarbures sont disposées au-dessus du matériau de remblayage inerte.

2. Dispositif d'introduction de gaz selon la revendication 1 caractérisé en ce que le matériau de remblayage inerte est en substance un matériau de remblayage inerte grossier (7) sur lequel reposent les tuyaux (1) de traitement par le gaz et par un matériau de remblayage fin inerte (6) qui est disposé sur le matériau de remblayage inerte brut.

3. Dispositif d'introduction de gaz selon la revendication 2, caractérisé en ce que le matériau de remblayage inerte brut ou grossier (7) présente une épaisseur d'environ 0,1 m et que le matériau de remblayage fin inerte (6) présente une épaisseur d'environ 0,3 m.

4. Dispositif d'introduction de gaz selon l'une des revendications 1 à 3, caractérisé en ce que les tuyaux (1) de traitement par le gaz sont recouverts par des éléments de recouvrement (2).

5. Dispositif d'introduction de gaz selon l'une des revendications 1 à 4, caractérisé en ce qu'un matelas tissé (5) est disposé au-dessus des tuyaux (1) de traitement par le gaz.

6. Dispositif d'introduction de gaz selon l'une des revendications 1 à 5, caractérisé en ce que les tuyaux (1) de traitement par le gaz sont disposés parallèlement, avec un écart d'environ 1,2 m, l'un de l'autre.

7. Dispositif d'introduction de gaz selon l'une des revendications 1 à 6, caractérisé en ce que les tuyaux (1) de traitement par le gaz sont raccordés à un dispositif d'alimentation en gaz de qualité technique, par exemple, en oxygène pur, ou en mélanges de gaz.

8. Dispositif d'introduction de gaz selon la revendication 7, caractérisé en ce que le dispositif d'alimentation en gaz est raccordé à un récipient sous pression, destiné à des gaz comprimés.

9. Dispositif d'introduction de gaz selon la revendication 7, caractérisé en ce que le dispositif d'alimentation en gaz est raccordé à un récipient pour gaz sous pression liquéfiés.

10. Dispositif d'introduction de gaz selon la revendication 7, caractérisé en ce que le dispositif d'alimentation en gaz est raccordé à un récipient pour gaz liquéfiés fortement réfrigérés.

Fig. 1

EP 0 292 736 B1

Fig. 2

Fig. 3